# FASCICULE DE BREVET EUROPEEN

(11) **EP 1 561 639 B1**
(45) Date de publication et mention de la délivrance du brevet: **09.04.2008**
(21) Numéro de dépôt: 05405054.7
(22) Date de dépôt: 04.02.2005
(51) Int. Cl.: B60Q 1/076, B60Q 1/12

(54) **Dispositif de positionnement de phares**
Stellvorrichtung für Scheinwerfer
Headlamp aiming device

(30) Priorité: 09.02.2004 FR 0401230
(43) Date de publication de la demande: 10.08.2005
(73) Titulaire: Société Industrielle de Sonceboz S.A., 2605 Sonceboz (CH)
(72) Inventeur: Pfister, Jean-Francois, 2605 Sonceboz (CH); Joigneau, Jean-Pierre, 78580 Maule (FR)
(74) Mandataire: Reuteler, Raymond Werner

(56) Documents cités:
- US-A- 4 951 178
- US-B1- 6 478 457
- US-B2- 6 641 292

## Description

La présente invention concerne un dispositif pour changer la direction de projection d'un phare automobile, notamment un dispositif à actionneur linéaire couplé à un support pivotant d'un phare, selon le préambule de la revendication 1.

Il est connu d'utiliser des actionneurs linéaires pour le réglage de la position horizontale ou verticale de phares automobiles, tels que décrits dans US 6,641,292 ou FR 2 787 863. Le réglage de la hauteur de projection du phare existe depuis longtemps et est destiné à ajuster la projection des phares en fonction de la charge dans un véhicule, afin de ne pas éblouir les usagers de la route venant en sens contraire. L'ajustement de la direction dans le plan horizontal du phare est destiné à mieux éclairer la route dans un virage, la direction des phares changeant en fonction de la trajectoire de la voiture. Le changement de direction des phares du système vis-écrou est généralement très dynamique et nécessite donc des entraînements performants et fiables.

Un inconvénient de nombreux systèmes existants est que l'actionneur est couplé au phare à travers une ou plusieurs articulations s'étendant généralement dans le prolongement de l'axe de la vis. Les éléments intermédiaires augmentent le jeu et le coût des dispositifs. Le prolongement dans l'axe de la vis augmente l'encombrement du système.

Un autre inconvénient des dispositifs de réglage de phare est que la vis à déplacement linéaire ne se trouve pas bien protégée de son environnement, notamment par rapport à la salissure ou une interférence avec des objets ou débris à l'extérieur de l'actionneur.

Au vu des inconvénients précités, un but de l'invention est de fournir un système de positionnement de phares automobiles avec un actionneur linéaire, qui est fiable, économe, peu encombrant, précis et protégé de son environnement.

Des buts de l'invention sont réalisés par l'actionneur linéaire selon la revendication 1.

Dans la présente invention, un dispositif de positionnement de phares automobiles comprend un actionneur linéaire pour le déplacement d'un support pivotant de phare, l'actionneur comprenant un boîtier, un moteur électrique pas-à-pas et un système vis-écrou entraîné par le moteur ayant une partie d'accouplement disposée à une de ces extrémités et destinée à engager une partie d'accouplement solidaire du support pivotant de phare. Le boîtier de l'actionneur entoure la vis et comprend une fente longitudinale disposée le long de la vis afin de permettre l'accès direct et transversal de la partie d'accouplement du support pivotant de phare à la partie d'accouplement du système vis-écrou.

L'accès direct et transversal d'une partie du support pivotant de phare réduit le nombre de pièces et les jeux, et permet une configuration à faible encombrement. Une fente de part et d'autre de la vis linéaire peut être prévue, de manière à rendre l'actionneur symétrique et utilisable pour engager le support de phare côté droit ou gauche. On peut également prévoir une seule fente longitudinale, disposée sur le dessus du boîtier par rapport au support sur lequel l'actionneur est monté.

Avantageusement, l'engagement direct du support mobile de phare à l'extrémité de la vis à travers la fente du boîtier permet d'assurer une certaine protection des parties mobiles de l'actionneur de l'environnement, dans un faible encombrement, tout en réduisant le nombre des pièces et d'articulations qui pourrait augmenter les jeux, ainsi que les coûts et la complexité du système.

D'autres buts et aspects avantageux de l'invention ressortiront des revendications, de la description détaillée ci-après, ainsi que des dessins annexés, dans lesquels:

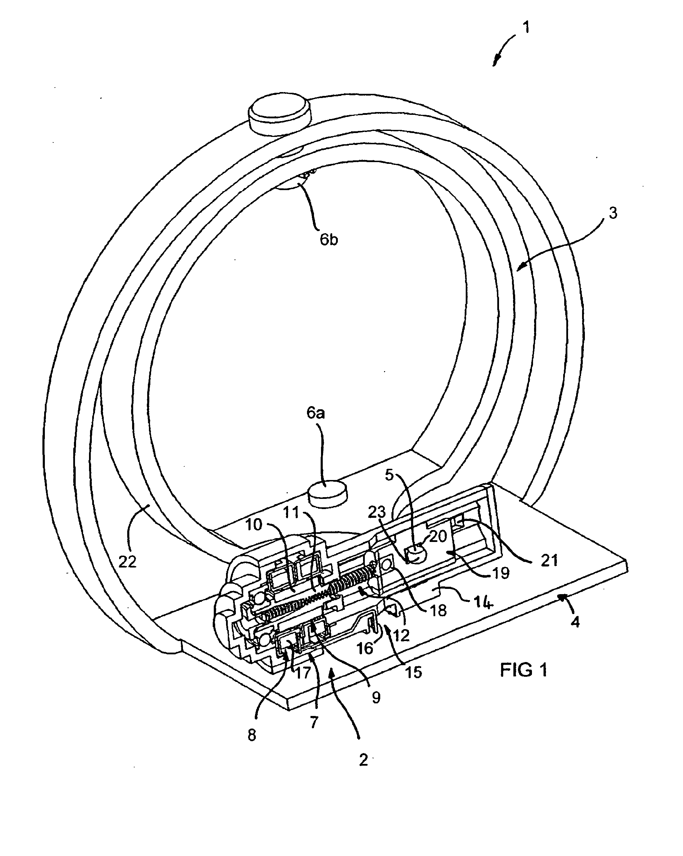

La Fig. 1 est une vue en perspective, en coupe, d'un dispositif de réglage de phares avec un actionneur linéaire selon l'invention monté sur un support et engageant le support pivotant de phare;

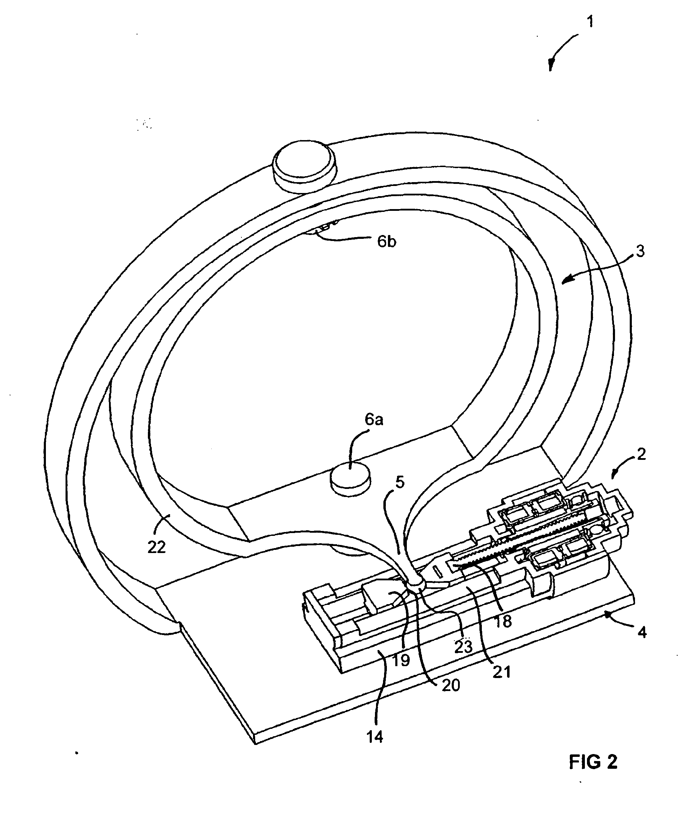

La Fig. 2 est une vue en perspective, selon une autre coupe, du dispositif selon l'invention.

Faisant référence aux figures, un dispositif de positionnement de phares 1 est illustré, comprenant un actionneur linéaire 2 pour le pivotement d'un support de phare 3 autour d'un axe de pivotement 6 fixé à un support 4.

L'actionneur 2 comprend un moteur pas-à-pas 7 avec une partie statorique bobinée 8 et un rotor 9 avec des aimants permanents 10 et une partie d'écrou 11, une vis 12 à déplacement linéaire engageant la partie d'écrou du rotor et un boîtier 14 dans lequel sont montés le moteur et la vis à déplacement linéaire. L'actionneur comporte en outre un connecteur 15 formé intégralement avec le boîtier et comprenant des bornes électriques 16 reliées aux bobines statoriques 17 du moteur.

A une extrémité 18 opposée du moteur, la vis à déplacement linéaire est fixée à une partie d'accouplement 19, dans cet exemple en matière plastique fixée ou surmoulée sur l'extrémité de la vis, et montée de manière à pouvoir glisser longitudinalement dans le boîtier 14. La partie d'accouplement 19 a une forme non axisymétrique afin de bloquer la rotation de cette partie ainsi que de la vis.

Dans le cadre de l'invention, il est également possible d'avoir un système vis-écrou où la vis comprend une partie de rotor, entraînée en rotation par le moteur pas-à-pas, et un écrou à déplacement linéaire qui comprend la partie d'accouplement. La vis est donc montée sur des paliers pour permettre sa rotation et le blocage de son déplacement linéaire, tandis que l'écrou est monté de manière à pouvoir glisser dans le boîtier, sa rotation étant bloquée.

La partie d'accouplement comprend en outre, dans cet exemple, un logement 20 dans lequel la partie d'accouplement 5 solidaire du support pivotant de phare 3 vient se loger. Afin de permettre la connexion directe entre le support de phare et la partie d'accouplement, le boîtier est muni d'une fente longitudinale 21. Le moteur, la vis et la partie d'accouplement sont ainsi protégés de l'environnement extérieur par le boîtier.

Le support de phare peut par exemple avoir la forme générale d'un anneau 22 monté sur deux axes de pivotement opposées 6a, 6b dans un support statique 4. La partie d'accouplement du support de phare est positionnée approximativement centralement et s'étend depuis l'axe de pivotement à son extrémité d'accouplement 23 dans une direction transversale au plan défini par l'anneau 22 de support. L'axe de la vis linéaire de l'actionneur est donc orienté de manière essentiellement orthogonale à la direction de projection des phares du véhicule, permettant ainsi une configuration avec le phare très compact.

La matière plastique, telle que du téflon ou du nylon, de la partie d'accouplement 19 de la vis linéaire, permet d'avoir une forme de logement 20 adaptée à la forme de la partie d'accouplement du support de phare, afin de réduire le frottement et l'usure et d'amortir les vibrations et chocs. La partie d'accouplement 19 pourrait également être munie d'un doigt s'étendant à travers la fente pour s'engager dans un logement ou trou complémentaire de la partie d'accouplement du support pivotant de phare.

## Revendications

1. Dispositif de positionnement de phares automobiles, comprenant un support pivotant de phare et un actionneur linéaire comprenant un boîtier (16), un moteur pas-à-pas (7) et un système vis-écrou (9, 12) entraîné par le moteur et ayant une partie d'accouplement (19) pour engager une partie d'accouplement complémentaire (5) du support de phare à positionner (3), **caractérisé en ce que** la partie d'accouplement (19) est montée de manière glissante dans le boîtier et est non axisymétrique afin d'arrêter la rotation de cette partie, le boîtier comprenant une fente longitudinale permettant une prise directe et transversale de la partie d'accouplement complémentaire (5) du support de phare à la partie d'accouplement (19) du système vis-écrou.

2. Dispositif selon la revendication 1, **caractérisé en ce que** la partie d'accouplement du support de phare s'étend solidairement et essentiellement centralement de l'axe de pivotement (6) à une extrémité libre (23) engageant la partie d'accouplement (19) de la vis linéaire.

3. Dispositif selon la revendication 1 ou 2, **caractérisé en ce que** le système vis-écrou comprend un écrou (9) et une vis à déplacement linéaire (12), l'écrou formant le rotor du moteur pas-à-pas.

4. Dispositif selon la revendication 1 ou 3, **caractérisé en ce que** la partie d'accouplement (19) du système vis-écrou (9,12) est en matière plastique surmoulée ou fixée à l'extrémité de la vis à déplacement linéaire.

5. Dispositif selon la revendication 1 ou 2, **caractérisé en ce que** le système vis-écrou comprend une vis entraînée en rotation par le moteur pas-à-pas et un écrou à déplacement linéaire qui comprend la partie d'accouplement (19).

6. Dispositif selon l'une des revendications précédentes, **caractérisé en ce que** le boîtier comprend une fente longitudinale de part et d'autre de la vis afin de permettre le montage de l'actionneur sur un support de phare côté droit ou côté gauche.

7. Dispositif selon l'une des revendications 1 à 5, **caractérisé en ce que** le boîtier comprend une seule fente longitudinale disposée sur le dessus du boîtier par rapport au support sur lequel l'actionneur est monté.

8. Dispositif selon l'une des revendications 1 à 6, **caractérisée en ce que** la partie d'accouplement (19) de l'actionneur comprend un logement (20) dans lequel la partie d'accouplement complémentaire (5) du support de phare vient se loger.

9. Dispositif selon l'une des revendications 1 à 7, **caractérisé en ce que** la partie d'accouplement de l'actionneur comprend un doigt s'étendant à travers la fente longitudinale pour être connecté à la partie d'accouplement complémentaire du support de phare.

## Claims

1. A device for positioning automobile headlights, comprising a pivoting headlight support and a linear actuator comprising a housing (16), a stepping motor (7) and a screw and nut mechanism (9, 12) driven by the motor and having a coupling part (19) for engaging a complementary coupling part (5) of the headlight support to be positioned (3), **characterised in that** the coupling part (19) is mounted slidably in the housing and is non-axisymmetrical so as to arrest rotation of this part, the housing comprising a longitudinal slot enabling (5) direct and transversal connection of the complementary coupling part (5) of the headlight support to the coupling part (19) of the screw and nut mechanism.

2. The device according to Claim 1, **characterised in that** the coupling part of the headlight support extends integrally and substantially centrally from the pivot axis (6) to a free end (23) engaging the coupling part (19) of the linear screw.

3. The device according to Claim 1 or 2, **characterised in that** the screw and nut mechanism comprises a nut (9) and a linear screw spindle (12), the nut forming the rotor of the stepping motor.

4. The device according to Claim 1 or 3, **characterised in that** the coupling part (19) of the screw and nut mechanism (9, 12) is made of plastic material overmoulded or fixed to the end of the linear screw spindle.

5. The device according to Claim 1 or 2, **characterised in that** the screw and nut mechanism comprises a screw driven in rotation by the stepping motor and a linear nut spindle which comprises the coupling part (19).

6. The device according to any of the preceding claims, **characterised in that** the housing comprises a longitudinal slot on either side of the screw to allow assembly of the actuator on a headlight support to the right or left side.

7. The device according to any of Claims 1 to 5, **characterised in that** the housing comprises a single longitudinal slot arranged on the top of the housing relative to the support on which the actuator is mounted.

8. The device according to any of Claims 1 to 6, **characterised in that** the coupling part (19) of the actuator comprises a housing (20) in which the complementary coupling part (5) of the headlight support is lodged.

9. The device according to any of Claims 1 to 7, **characterised in that** the coupling part of the actuator comprises a finger extending through the longitudinal slot to be connected to the complementary coupling part of the headlight support.

## Patentansprüche

1. Stellvorrichtung für Automobilscheinwerfer, die einen schwenkbaren Scheinwerferhalter und einen Linearantrieb aus einem Gehäuse (16), einem Schrittmotor (7) und einem Spindel-Mutter-System (9, 12) umfasst, das durch den Motor angetrieben wird und einen Kupplungsabschnitt (19) besitzt, um einen zusätzlichen Kupplungsabschnitt (5) des Halters des zu stellenden Scheinwerfers (3) anzukoppeln, **dadurch gekennzeichnet, dass** der Kupplungsabschnitt (19) gleitend im Gehäuse montiert und nicht axialsymmetrisch ist, um die Drehung dieses Abschnitts anzuhalten, wobei das Gehäuse einen Längsschlitz umfasst, der einen direkten Querabgriff des zusätzlichen Kupplungsabschnitts (5) des Scheinwerferhalters am Kupplungsabschnitt (19) des Spindel-Mutter-Systems erlaubt.

2. Vorrichtung nach Anspruch 1, **dadurch gekennzeichnet, dass** sich der Kupplungsabschnitt des Scheinwerferhalters integriert und im Wesentlichen mittig zur Schwenkachse (6) zu einem freien Ende (23) hin erstreckt, das an den Kupplungsabschnitt (19) der Spindel ankoppelt.

3. Vorrichtung nach Anspruch 1 oder 2, **dadurch gekennzeichnet, dass** das Spindel-Mutter-System eine Mutter (9) und sich eine linear verschiebende Spindel (12) umfasst, wobei die Mutter den Rotor des Schrittmotors bildet.

4. Vorrichtung nach Anspruch 1 oder 3, **dadurch gekennzeichnet, dass** der Kupplungsabschnitt (19) des Spindel-Mutter-Systems (9, 12) aus Kunststoff besteht, der am Ende der sich linear verschiebenden Spindel überspritzt oder befestigt ist.

5. Vorrichtung nach Anspruch 1 oder 2, **dadurch gekennzeichnet, dass** das Spindel-Mutter-System eine durch den Schrittmotor in Drehung versetzte Spindel und eine sich linear verschiebende Mutter umfasst, die den Kupplungabschnitt (19) umfasst.

6. Vorrichtung nach einem der vorangehenden Ansprüche, **dadurch gekennzeichnet, dass** das Gehäuse einen Längsschlitz zu beiden Seiten der Spindel umfasst, um die Montage des Antriebs rechts oder links an einem Scheinwerferhalter zu erlauben.

7. Vorrichtung nach einem der Ansprüche 1 bis 5, **dadurch gekennzeichnet, dass** das Gehäuse lediglich einen Längsschlitz umfasst, der bezüglich des Halters, auf den der Antrieb montiert ist, auf der Oberseite des Gehäuses angeordnet ist.

8. Vorrichtung nach einem der Ansprüche 1 bis 6, **dadurch gekennzeichnet, dass** der Kupplungsabschnitt (19) des Antriebs ein Lager (20) umfasst, in dem der zusätzliche Kupplungsabschnitt (5) des Scheinwerferhalters untergebracht wird.

9. Vorrichtung nach einem der Ansprüche 1 bis 7, **dadurch gekennzeichnet, dass** der Kupplungsabschnitt des Antriebs einen Finger umfasst, der sich quer über den Längsschlitz hinweg erstreckt, um mit dem zusätzlichen Kupplungsabschnitt des Scheinwerferhalters verbunden zu werden.
